# EUROPEAN PATENT SPECIFICATION

(11) **EP 2 759 426 B1**
(45) Date of publication and mention of the grant of the patent: **03.02.2021**
(21) Application number: 13196235.9
(22) Date of filing: 09.12.2013
(51) Int. Cl.: B60J 1/20, E06B 9/40, B64C 1/14, E06B 9/24

(54) **Window shading assembly**
Fensterbeschattungsanordnung
Ensemble de pare-soleil de fenêtre

(30) Priority: 29.01.2013 US 201313752669
(43) Date of publication of application: 30.07.2014
(73) Proprietor: The Boeing Company, Chicago, IL 60606-1596 (US)
(72) Inventor: Dunn, Brandon W., Lynwood, WA 98087 (US)
(74) Representative: Witte, Weller & Partner Patentanwälte mbB

(56) References cited:
- EP-A2- 0 273 220
- DE-A1- 19 960 032
- US-A1- 2004 262 453
- US-A1- 2009 277 593
- US-A1- 2009 283 227
- US-B1- 6 832 641

## Description

### FIELD OF THE DISCLOSURE

This disclosure relates to a window shading assembly which may be used in a wide variety of structures such as in an aircraft, in a vehicle, or in another type of structure to vary the amount of light coming through the window.

### BACKGROUND

It is often beneficial to be able to selectively alter the amount of light coming through a window in a structure such as in an aircraft or other type of structure. Aircraft typically utilize a plastic shade, contained in a housing, which slides over a window to allow a passenger to control the amount of light coming through the window. However, the housing occupies substantial volume behind the sidewall in the area over the window in order to contain the shade when it is in a lifted position. This housing prevents ducting, wiring, insulation, and other structures from being installed in that area. Moreover, the plastic shade is accessible to the passenger which may lead to the plastic shade becoming dirty, getting worn, or incurring damage. Additionally, this arrangement does not allow the user to gradually transition the amount of light coming through the window as the areas of the window covered by the plastic shade are completely opaque and the areas of the window not covered by the plastic shade are transparent.

Another type of existing shade includes one roller with a fabric sheet wrapped around the roller. The fabric sheet includes a free end that is configured to be hooked into a closed position. However, this arrangement does not allow the user to gradually transition the amount of light coming through the window, and further allows the user to have access to the fabric sheet which may lead to the fabric sheet becoming dirty, getting worn, or incurring damage. Still other existing window shade systems use electrically-dimmable glass or electrically-operated shutters to allow a user to control the control the amount of light coming through the window. However, these systems require their own power source and electric controls to adjust the opacity of the glass or to control movement of the electrically-operated shutters.

A window shade is needed to overcome one or more of the issues of one or more of the existing window shades.

Document US 2004 262453 A1, according to its abstract, states windows, including windows for an aircraft. The windows include a shade. The shade has variable light transmissive characteristics. The shade is entrained upon rollers so that it may roll across the lens window. The parts of the shade are nearly opaque and other parts are nearly transparent. The result is a shade that has varying optical density depending upon the position of the hand operated rollers or shade positioning mechanism.

### SUMMARY

There is provided a window shade assembly comprising a first member; a second member disposed apart from the first member; a film having a first end coupled to the first member and a second opposed end coupled to the second member, the film having an opaque portion and a transparent portion; and an actuating device coupled to the first member or the second member for moving the first member or the second member to move the film between the first and the second members, wherein the actuating device comprises a control member, a first gear, a second gear, a third gear, a fourth gear, a fifth gear and a chain or belt, wherein the control member comprises a knob which rotates with a first shaft, wherein the first gear is concentrically connected to the first shaft so that when the control member is rotated the first shaft is rotated causing the first gear to rotate, wherein the first gear is aligned in parallel arrangement against the second gear to rotate the second gear around or with a second shaft, wherein the second gear is aligned in parallel arrangement against the third gear to rotate the third gear around or with a third shaft, wherein the third gear is aligned in perpendicular arrangement against the fourth gear to rotate the fourth gear, wherein the chain or belt is coupled between the fourth gear, which is connected to the first member, and the fifth gear connected to the second member. Further, there is provided a method for operating a window shade assembly, the method comprising moving a film so that a transparent portion of the film covers a section of a window in order to make the section of the window transparent to a viewer; and moving the film so that an opaque portion of the film covers the section of the window in order to make the section of the window opaque to the viewer, wherein the moving the film steps each further comprise manually moving a control member to mechanically move the film using a mechanical actuating device, wherein the actuating device comprises the control member, a first gear, a second gear, a third gear, a fourth gear, a fifth gear and a chain or belt, wherein the control member comprises a knob which rotates with a first shaft, wherein the first gear is concentrically connected to the first shaft so that when the control member is rotated the first shaft is rotated causing the first gear to rotate, wherein the first gear is aligned in parallel arrangement against the second gear to rotate the second gear around or with a second shaft, wherein the second gear is aligned in parallel arrangement against the third gear to rotate the third gear around or with a third shaft, wherein the third gear is aligned in perpendicular arrangement against the fourth gear to rotate the fourth gear, wherein the chain or belt is coupled between the fourth gear, which is connected to the first member, and the fifth gear connected to the second member. Further embodiments are disclosed in the dependent claims. The scope of the present disclosure is defined solely by the appended claims and is not affected by the statements within this summary.

### BRIEF DESCRIPTION OF THE DRAWINGS

The disclosure can be better understood with reference to the following drawings and description. The components in the figures are not necessarily to scale, emphasis instead being placed upon illustrating the principles of the disclosure.
Figure 1 illustrates a front perspective view of one embodiment of a window shade assembly attached to a structure comprising an aircraft;
Figure 2 illustrates a front perspective view of the window shade assembly of Figure 1 removed from the structure;
Figure 3 illustrates a back view of the window shade assembly of Figure 1 attached to the structure with a back window panel removed;
Figure 4 illustrates a side view of the window assembly of Figure 1 attached to the structure; and
Figure 5 is a flowchart illustrating one embodiment of a method for operating a window shade assembly.

### DETAILED DESCRIPTION

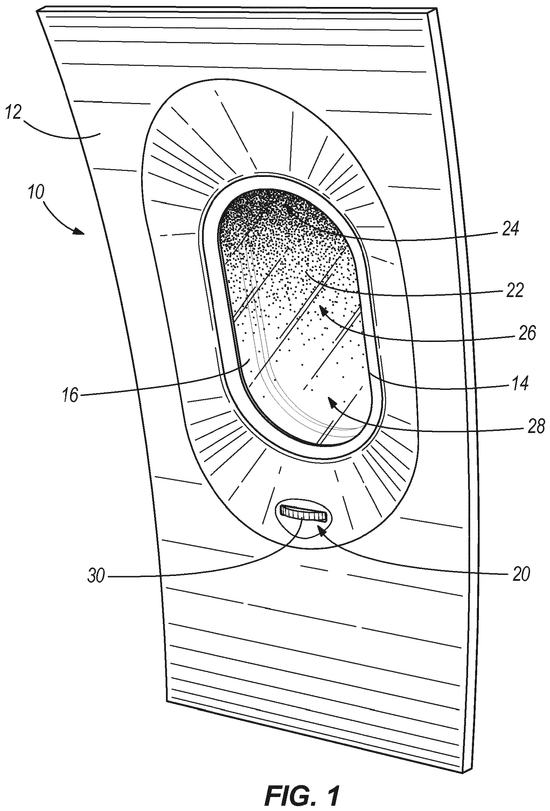

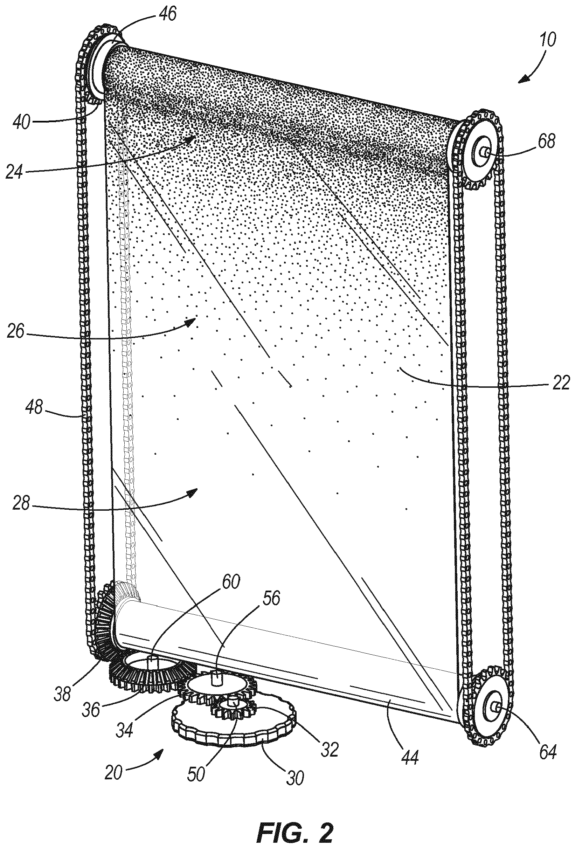

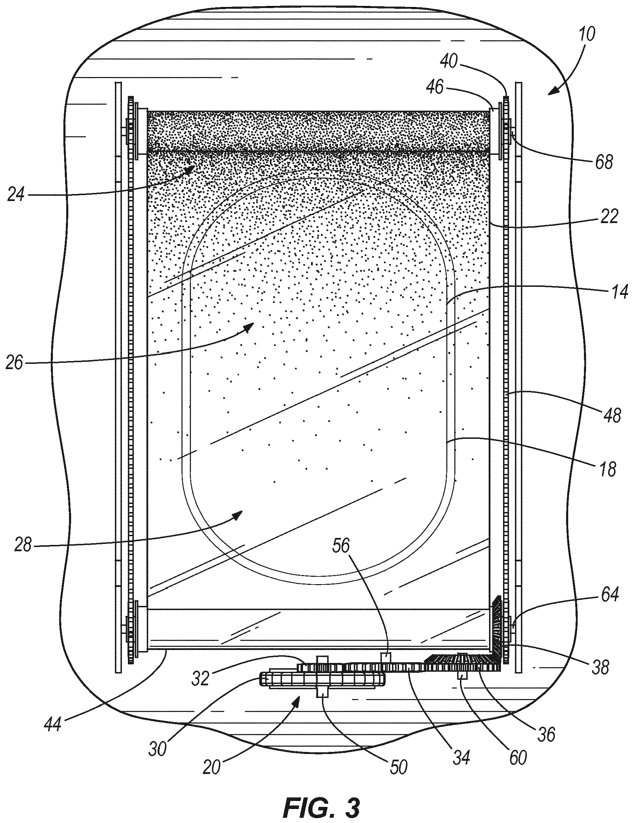

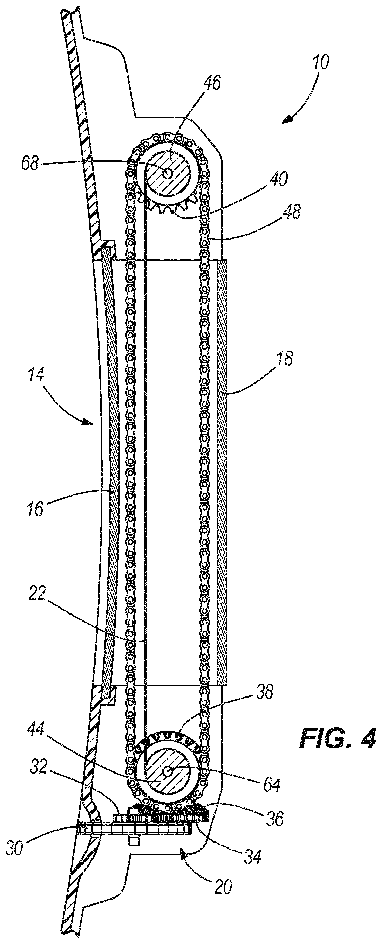

Figure 1 illustrates a front perspective view of one embodiment of a window shade assembly 10 attached to a structure 12 comprising an aircraft. In other embodiments, the window shade assembly 10 may be attached to any type of structure such as any type of vehicle or varying structures. Figure 2 illustrates a front perspective view of the window shade assembly 10 of Figure 1 removed from the structure 12. Figure 3 illustrates a back view of the window shade assembly 10 of Figure 1 attached to the structure 12 with a back window panel removed. Figure 4 illustrates a side view of the window assembly 10 of Figure 1 attached to the structure 12.

As shown collectively in Figures 1-4, the window shade assembly 10 includes: a window 14; an inner pane 16; an outer pane 18; an actuating device 20; and a film 22. The inner pane 16 and the outer pane 18 of the window 14 are made of a transparent material such as glass or other transparent materials to allow a person to look through the window 14. The actuating device 20 and the film 22 are disposed between the inner pane 16 and the outer pane 18 of the window 14. The actuating device 20 is coupled to the film 22 for moving the film 22 within the window 14 between the inner pane 16 and the outer pane 18.

The film 22 is made of a material, such as transparent plastic film, which gradually transitions from an opaque portion 24, to a translucent portion 26, to a transparent portion 28. In other embodiments, the film 22 may be made of varying materials. The term 'opaque' is defined as being in a range of 80% to 100% opacity. The term 'translucent' is defined as being in a range of 30% to 80% opacity. The translucent portion 26 is gradiated such that its opacity varies from a higher percentage adjacent the opaque portion 24 to a lower percentage adjacent the transparent portion 28. In other embodiments, the gradiation of the translucent portion 26 may vary. The term 'transparent' is defined as being in a range of 0% to 30% opacity. In other embodiments, the ranges may vary. In still other embodiments, the arrangement, configuration, and respective sizes of the opaque portion 24, the translucent portion 26, and the transparent portion 28 may vary, or one or more of the opaque portion 24, the translucent portion 26, or the transparent portion 28 may not be present. The film 22 has an ultra-violet resistance in a range of 100 kLy/yr to 1,000 kLy/yr, and a heat resistance in a range of -40 C to 100 C. The film 22 is flexible enough to bend in a radius of 0.25 inches to 0.5 inches with no plastic deformation. In other embodiments, the ranges may vary.

The actuating device 20 is used to move the film 22 to control whether the opaque portion 24, the translucent portion 26, or the transparent portion 28, or a combination thereof, covers the window 14. The opaque portion 24, the translucent portion 26, and the transparent portion 28 of the film 22 are each separately sized to completely cover the window 14 when they are each separately aligned over the window 14. In such manner, when the opaque portion 24 is disposed to completely cover the window 14 the window 14 is opaque. Similarly, when the translucent portion 26 is disposed to completely cover the window 14 the window 14 is translucent. Finally, when the transparent portion 28 is disposed to completely cover the window 14 the window 14 is transparent. In other embodiments, the size and configurations of the opaque portion 24, the translucent portion 26, and the transparent portion 28 of the film 22 may vary. For instance, in one embodiment the opaque portion 24, the translucent portion 26, and the transparent portion 28 may gradually transition into each other via a gradient so that a top of the window 14 may be opaque which fades into a translucent bottom half of the window 14. For instance, the translucent portion 26 may be gradiated such that its opacity varies from a higher percentage adjacent the opaque portion 24 to a lower percentage adjacent the transparent portion 28. In still other embodiments, varying configurations may be utilized.

The actuating device 20 includes: a control member 30; gears 32, 34, 36, 38, and 40; a first member 44; a second member 46; and a third member 48. The control member 30 is used by a person to control movement of the actuating device 20 to mechanically move the film 22 relative to the window 14 without the necessity of a power source. The control member 30 is a knob which a passenger may rotate to cause the knob to rotate around or with a first shaft 50.

The first gear 32 is concentrically connected to the first shaft 50 so that when the control member 30 is rotated, the first shaft 50 is rotated causing the first gear 32 to rotate. The first gear 32 is aligned in parallel arrangement against the second gear 34 to rotate the second gear 34 around or with a second shaft 56. The second gear 34 is aligned in parallel arrangement against the third gear 36 to rotate the third gear 36 around or with a third shaft 60. The third gear 36 is aligned in perpendicular arrangement against a fourth gear 38 to rotate the fourth gear 38. The fourth gear 38 is connected to the first member 44 so that when the fourth gear 38 rotates around or with a fourth shaft 64 the first member 44 also rotates around or with the fourth shaft 64. The first member 44 is a roller which is disposed at a bottom of the window 14. In other embodiments, the first member 44 may vary. In still another embodiment, the first member 44 may act as the fourth shaft 64 if the fourth gear 38 is formed with or coupled to the first member 44. In other embodiments, varying configurations may be utilized.

The third member 48 is coupled between and to the fourth gear 38, which is connected to the first member 44, and the fifth gear 40 connected to the second member 46. The third member 48 is a chain, belt, or other type of member. When the fourth gear 38 rotates around or with the fourth shaft 64, thereby rotating the attached first member 44 around or with the fourth shaft 64, the coupled third member 48 also rotates thereby rotating the fifth gear 40 and the attached second member 46 around or with a fifth shaft 68. The second member 46 is a roller which is disposed at a top of the window 14 apart from the first member 44. In other embodiments, the second member 46 may vary. In still another embodiment, the second member 46 may act as the fifth shaft 68 if the fifth gear 40 is formed with or coupled to the second member 46. In other embodiments, varying configurations may be utilized.

The film 22 is continuously disposed against, around, and in-between the first member 44 and the second member 46 so that when the first member 44 rotates around or with the fourth shaft 64 and the second member 46 rotates around or with the fifth shaft 68, the film 22 moves around or with the first and second members 44 and 46. As a result, due to the above described arrangement, when a person rotates the control member 30 the person is able to selectively control whether the opaque portion 24, the translucent portion 26, or the transparent portion 28 of the film 22, or a combination thereof, is disposed over the window 14 to selectively control whether the window is opaque, translucent, transparent, or a combination thereof. In other embodiments, a varying number, type, configuration, alignment, or material may be used for any of the components of the window shade assembly 10.

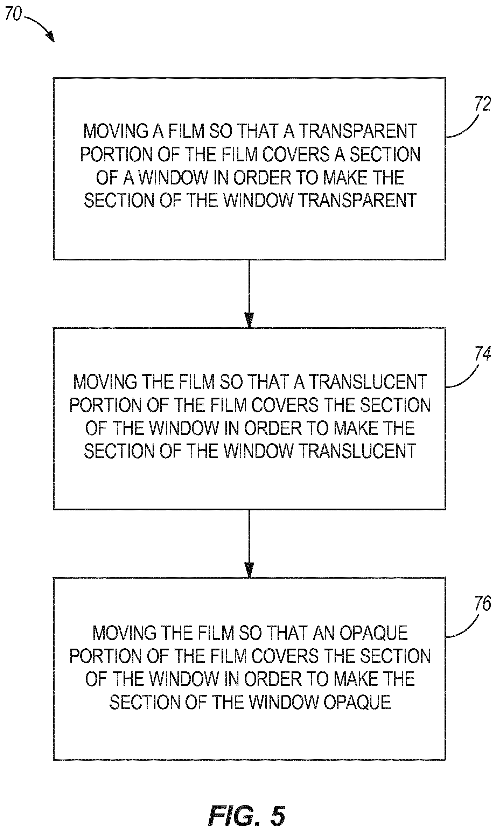

Figure 5 is a flowchart illustrating one embodiment of a method 70 for operating a window shade assembly. In step 72, a film is moved so that a transparent portion of the film covers a section of a window in order to make the section of the window transparent. During this step, an opaque portion of the film and a translucent portion of the film may be rolled around a second member towards the first member and the transparent portion of the film may be rolled around the first member towards the second member to be disposed between the first and the second members. In step 74, the film is moved so that a translucent portion of the film covers the section of the window in order to make the section of the window translucent. During this step, the opaque portion of the film may be further rolled towards the first member, the transparent portion of the film may be rolled around the second member, and the translucent portion of the film may be rolled from the first member towards the second member to be disposed between the first and the second members. In step 76, the film is moved so that an opaque portion of the film covers the section of the window in order to make the section of the window opaque. During this step, the transparent portion of the film and the translucent portion of the film may be rolled around the second member and the opaque portion of the film may be rolled around the first member towards the second member to be disposed between the first and the second members. In one embodiment, each of steps 72, 74, and 76 may further include moving the film between panes of the window due to a user moving a control member to mechanically move the film using a mechanical actuating device without a power source. The window shade assembly and the window may be a portion of an aircraft, vehicle, or other type of structure. In other embodiments, one or more steps may be modified in substance or in order, or one or more steps may be added depending on the configuration of the film which may vary.

One or more embodiments of the disclosure may reduce one or more issues of one or more of the existing window shades by: reducing the size needed for the window shade; allowing a user to mechanically control the window shade without a power source; allowing a user to selectively transition the shading of the window between opaque, translucent, and transparent; disposing the window shade away from the user thereby preventing the window shade from become dirty, worn, or damaged; or by containing one or more additional advantages.

## Claims

1. A window shade assembly (10) comprising:
a first member (44);
a second member (46) disposed apart from the first member;
a film (22) having a first end coupled to the first member and a second opposed end coupled to the second member, the film having an opaque portion (24) and a transparent portion (28); and
an actuating device (20) coupled to the first member or the second member for moving the first member or the second member to move the film between the first and the second members,
**characterized in that** the actuating device (20) comprises a control member (30), a first gear (32), a second gear (34), a third gear (36), a fourth gear (38), a fifth gear (40) and a chain or belt (48),
wherein the control member (30) comprises a knob which rotates with a first shaft (50),
wherein the first gear (32) is concentrically connected to the first shaft (50) so that when the control member (30) is rotated the first shaft (50) is rotated causing the first gear (32) to rotate,
wherein the first gear (32) is aligned in parallel arrangement against the second gear (34) to rotate the second gear (34) around or with a second shaft (56),
wherein the second gear (34) is aligned in parallel arrangement against the third gear (36) to rotate the third gear (36) around or with a third shaft (60),
wherein the third gear (36) is aligned in perpendicular arrangement against the fourth gear (38) to rotate the fourth gear (38),
wherein the chain or belt (48) is coupled between the fourth gear (38), which is connected to the first member (44), and the fifth gear (40) connected to the second member (46).

2. The window shade assembly (10) of claim 1 wherein the first member (44) and the second member (46) each comprise a roller.

3. The window shade assembly (10) of claim 1 or 2 wherein the film (22) transitions from the opaque portion (24) to a translucent portion (26) to the transparent portion (28) with the translucent portion being gradiated such that its opacity varies from a higher percentage adjacent the opaque portion to a lower percentage adjacent the transparent portion.

4. The window shade assembly (10) of any preceding claim wherein the film (22) continuously wraps around the first member (44) and the second member (46).

5. The window shade assembly (10) of any preceding claim wherein the opaque portion (24) and the transparent portion (28) are each sized to completely cover a viewable section of a window (14).

6. A method (70) for operating a window shade assembly (10), the method comprising:
moving (72) a film (22) so that a transparent portion (28) of the film covers a section of a window (14) in order to make the section of the window transparent to a viewer; and
moving (76) the film so that an opaque portion (24) of the film covers the section of the window in order to make the section of the window opaque to the viewer,
wherein the moving (72, 76) the film (22) steps each further comprise manually moving a control member (20) to mechanically move the film using a mechanical actuating device,
**characterized in that**
the actuating device (20) comprises the control member (30), a first gear (32), a second gear (34), a third gear (36), a fourth gear (38), a fifth gear (40) and a chain or belt (48),
wherein the control member (30) comprises a knob which rotates with a first shaft (50),
wherein the first gear (32) is concentrically connected to the first shaft (50) so that when the control member (30) is rotated the first shaft (50) is rotated causing the first gear (32) to rotate,
wherein the first gear (32) is aligned in parallel arrangement against the second gear (34) to rotate the second gear (34) around or with a second shaft (56),
wherein the second gear (34) is aligned in parallel arrangement against the third gear (36) to rotate the third gear (36) around or with a third shaft (60),
wherein the third gear (36) is aligned in perpendicular arrangement against the fourth gear (38) to rotate the fourth gear (38),
wherein the chain or belt (48) is coupled between the fourth gear (38), which is connected to the first member (44), and the fifth gear (40) connected to the second member (46).

7. The method (70) of claim 6 wherein the moving (72, 76) the film (22) steps each further comprise moving the film through a passage defined between panes (16, 18) of the window (14).

8. The method (70) of claim 6 or 7 further comprising moving (74) the film (22) so that a translucent portion (26) of the film covers the section of the window (14) in order to make the section of the window translucent to the viewer.

9. The method (70) of any of claims 6-8 wherein moving (72, 74, 76) the film (22) further comprises selectively moving the film between a pair of spaced apart rollers.

## Patentansprüche

1. Fensterbeschattungsanordnung (10) mit:
einem ersten Element (44);
einem zweiten Element (46), das beabstandet von dem ersten Element angeordnet ist;
einem Überzug (22), der ein erstes Ende aufweist, das mit dem ersten Element gekoppelt ist, und ein zweites entgegengesetztes Ende aufweist, das mit dem zweiten Element gekoppelt ist, wobei der Überzug einen lichtundurchlässigen Abschnitt (24) und einen transparenten Abschnitt (28) aufweist; und
eine Aktuierungseinrichtung (20), die mit dem ersten Element oder dem zweiten Element gekoppelt ist, um das erste Element oder das zweite Element zu bewegen, um den Überzug zwischen dem ersten und dem zweiten Element zu bewegen,
**dadurch gekennzeichnet, dass**
die Aktuierungseinrichtung (20) ein Steuerungselement (30), ein erstes Zahnrad (32), ein zweites Zahnrad (34), ein drittes Zahnrad (36), ein viertes Zahnrad (38), ein fünftes Zahnrad (40) und eine Kette oder Riemen (48) aufweist,
wobei das Steuerungselement (30) einen Knopf aufweist, der mit einer ersten Welle (50) rotiert,
wobei das erste Zahnrad (32) konzentrisch mit der ersten Welle (50) verbunden ist, so dass, wenn das Steuerungselement (30) rotiert wird, die erste Welle (50) rotiert wird, was bewirkt, dass das erste Zahnrad (32) rotiert,
wobei das das erste Zahnrad (32) in paralleler Anordnung gegen das zweite Zahnrad (34) ausgerichtet ist, um das zweite Zahnrad (34) um oder mit einer zweiten Welle (56) zu rotieren,
wobei das zweite Zahnrad (34) in paralleler Anordnung gegen das dritte Zahnrad (36) ausgerichtet ist, um das dritte Zahnrad (36) um oder mit einer dritten Welle (60) zu rotieren,
wobei das dritte Zahnrad (36) in senkrechter Anordnung gegen das vierte Zahnrad (38) ausgerichtet ist, um das vierte Zahnrad (38) zu rotieren,
wobei die Kette oder Riemen (48) zwischen dem vierten Zahnrad (38), das mit dem ersten Element (44) verbunden ist, und dem fünften Zahnrad (40), das mit dem zweiten Element (46) verbunden ist, gekoppelt ist.

2. Fensterbeschattungsanordnung (10) nach Anspruch 1, wobei das erste Element (44) und das zweite Element (46) jeweils eine Rolle aufweisen.

3. Fensterbeschattungsanordnung (10) nach Anspruch 1 oder 2, wobei der Überzug (22) von dem lichtundurchlässigen Abschnitt (24) zu einem lichtdurchlässigen Abschnitt (26) zu dem transparenten Abschnitt (28) übergeht, wobei der lichtdurchlässige Abschnitt derart abgestuft ist, dass seine Lichtundurchlässigkeit von einem höheren Prozentsatz benachbart zu dem lichtundurchlässigen Abschnitt zu einem niedrigeren Prozentsatz benachbart zu dem transparenten Abschnitt variiert.

4. Fensterbeschattungsanordnung (10) nach einem der voranstehenden Ansprüche, wobei der Überzug (22) kontinuierlich um das erste Element (44) und das zweite Element (46) gewickelt ist.

5. Fensterbeschattungsanordnung (10) nach einem der voranstehenden Ansprüche, wobei der lichtundurchlässige Abschnitt (24) und der transparente Abschnitt (28) jeweils dimensioniert sind, einen durchblickbaren Abschnitt eines Fensters (14) vollständig abzudecken.

6. Verfahren (70) zum Betreiben einer Fensterbeschattungsanordnung (10), wobei das Verfahren aufweist:
Bewegen (72) eines Überzugs (22), so dass ein transparenter Abschnitt (28) des Überzugs ein Abschnitt eines Fensters (14) abdeckt, um den Abschnitt des Fensters transparent für einen Betrachter zu machen; und
Bewegen (76) des Überzugs, so dass ein lichtundurchlässiger Abschnitt (24) des Überzugs den Abschnitt des Fensters abdeckt, um den Abschnitt des Fensters lichtundurchlässig für den Betrachter zu machen,
wobei die Schritte des Bewegens (72, 76) des Überzugs (22) jeweils das manuelle Bewegen eines Steuerungselements (20) aufweisen, um den Überzug mechanisch zu bewegen unter Nutzung einer mechanischen Aktuierungseinrichtung,
**dadurch gekennzeichnet, dass**
die Aktuierungseinrichtung (20) das Steuerungselement (30), ein erstes Zahnrad (32), ein zweites Zahnrad (34), ein drittes Zahnrad (36), ein viertes Zahnrad (38), ein fünftes Zahnrad (40) und eine Kette oder Riemen (48) aufweist,
wobei das Steuerungselement (30) einen Knopf aufweist, der mit einer ersten Welle (50) rotiert,
wobei das erste Zahnrad (32) konzentrisch mit der ersten Welle (50) verbunden ist, so dass, wenn das Steuerungselement (30) rotiert wird, die erste Welle (50) rotiert wird, was bewirkt, dass das erste Zahnrad (32) rotiert,
wobei das erste Zahnrad (32) in paralleler Anordnung gegen das zweite Zahnrad (34) ausgerichtet ist, um das zweite Zahnrad (34) um oder mit einer zweiten Welle (56) zu rotieren,
wobei das zweite Zahnrad (34) in paralleler Anordnung gegen das dritte Zahnrad (36) ausgerichtet ist, um das dritte Zahnrad (36) um oder mit einer dritten Welle (60) zu rotieren,
wobei das dritte Zahnrad (36) in senkrechter Anordnung gegen das vierte Zahnrad (38) ausgerichtet ist, um das vierte Zahnrad (38) zu rotieren,
wobei die Kette oder Riemen (48) zwischen dem vierten Zahnrad (38), das mit dem ersten Element (44) verbunden ist, und dem fünften Zahnrad (40), das mit dem zweiten Element (46) verbunden ist, gekoppelt ist.

7. Verfahren (70) nach Anspruch 6, wobei die Schritte des Bewegens (72, 76) des Überzugs (22) jeweils das Bewegen des Überzugs durch einen Durchgang aufweist, der zwischen Scheiben (16, 18) des Fensters (14) definiert ist.

8. Verfahren (70) nach Anspruch 6 oder 7, des Weiteren mit dem Bewegen (74) des Überzugs (22), so dass ein lichtdurchlässiger Abschnitt (26) des Überzugs den Abschnitt des Fensters (14) bedeckt, um den Abschnitt des Fensters lichtdurchlässig für den Betrachter zu machen.

9. Verfahren (70) nach einem der Ansprüche 6 bis 8, wobei das Bewegen (72, 74, 76) des Überzugs (22) des Weiteren das wahlweise Bewegen des Überzugs zwischen einem Paar von voneinander beabstandeten Rollen aufweist.

## Revendications

1. Ensemble de pare-soleil de fenêtre (10) comprenant :
un premier organe (44) ;
un deuxième organe (46) disposé à l'écart du premier organe ;
un film (22) ayant une première extrémité accouplée au premier organe et une deuxième extrémité opposée accouplée au deuxième organe, le film ayant une portion opaque (24) et une portion transparente (28) ; et
un dispositif d'actionnement (20) accouplé au premier organe ou au deuxième organe pour déplacer le premier organe ou le deuxième organe pour déplacer le film entre le premier et le deuxième organe,
**caractérisé en ce que**
le dispositif d'actionnement (20) comprend un organe de commande (30), un premier engrenage (32), un deuxième engrenage (34), un troisième engrenage (36), un quatrième engrenage (38), un cinquième engrenage (40) et une chaîne ou une courroie (48),
l'organe de commande (30) comprenant un bouton qui tourne avec un premier arbre (50),
le premier engrenage (32) étant connecté concentriquement au premier arbre (50) de telle sorte que lorsque l'organe de commande (30) est tourné, le premier arbre (50) soit tourné, ce qui provoque la rotation du premier engrenage (32),
le premier engrenage (32) étant aligné suivant un agencement parallèle contre le deuxième engrenage (34) de manière à faire tourner le deuxième engrenage (34) autour d'un deuxième arbre (56) ou conjointement avec celui-ci,
le deuxième engrenage (34) étant aligné suivant un agencement parallèle contre le troisième engrenage (36) de manière à faire tourner le troisième engrenage (36) autour d'un troisième arbre (60) ou conjointement avec celui-ci,
le troisième engrenage (36) étant aligné suivant un agencement perpendiculaire contre le quatrième engrenage (38) de manière à faire tourner le quatrième engrenage (38),
la chaîne ou la courroie (48) étant accouplée entre le quatrième engrenage (38) qui est connecté au premier organe (44) et le cinquième engrenage (40) connecté au deuxième organe (46).

2. Ensemble de pare-soleil de fenêtre (10) selon la revendication 1, dans lequel le premier organe (44) et le deuxième organe (46) comprennent chacun un rouleau.

3. Ensemble de pare-soleil de fenêtre (10) selon la revendication 1 ou 2, dans lequel le film (22) passe de la portion opaque (24), en passant par une portion translucide (26), à la portion transparente (28), la portion translucide étant progressive de telle sorte que son opacité varie d'un pourcentage plus élevé à côté de la portion opaque à un pourcentage plus faible à côté de la portion transparente.

4. Ensemble de pare-soleil de fenêtre (10) selon l'une quelconque des revendications précédentes, dans lequel le film (22) s'enveloppe en continu autour du premier organe (44) et du deuxième organe (46).

5. Ensemble de pare-soleil de fenêtre (10) selon l'une quelconque des revendications précédentes, dans lequel la portion opaque (24) et la portion transparente (28) sont chacune dimensionnées de manière à recouvrir complètement une section d'une fenêtre (14) à travers laquelle on peut regarder.

6. Procédé (70) pour faire fonctionner un ensemble de pare-soleil de fenêtre (10), le procédé comprenant :
le déplacement (72) d'un film (22) de telle sorte qu'une portion transparente (28) du film recouvre une section d'une fenêtre (14) afin de rendre la section de la fenêtre transparente pour une personne ; et
le déplacement (76) du film de telle sorte qu'une portion opaque (24) du film recouvre la section de la fenêtre afin de rendre la section de la fenêtre opaque pour la personne,
les étapes de déplacement (72, 76) du film (22) comprenant en outre chacune le déplacement manuel d'un organe de commande (20) pour déplacer mécaniquement le film en utilisant un dispositif d'actionnement mécanique,
**caractérisé en ce que**
le dispositif d'actionnement (20) comprend l'organe de commande (30), un premier engrenage (32), un deuxième engrenage (34), un troisième engrenage (36), un quatrième engrenage (38), un cinquième engrenage (40) et une chaîne ou une courroie (48),
l'organe de commande (30) comprenant un bouton qui tourne avec un premier arbre (50),
le premier engrenage (32) étant connecté concentriquement au premier arbre (50) de telle sorte que lorsque l'organe de commande (30) est tourné, le premier arbre (50) soit tourné, ce qui provoque la rotation du premier engrenage (32),
le premier engrenage (32) étant aligné suivant un agencement parallèle contre le deuxième engrenage (34) de manière à faire tourner le deuxième engrenage (34) autour d'un deuxième arbre (56) ou conjointement avec celui-ci,
le deuxième engrenage (34) étant aligné suivant un agencement parallèle contre le troisième engrenage (36) de manière à faire tourner le troisième engrenage (36) autour d'un troisième arbre (60) ou conjointement avec celui-ci,
le troisième engrenage (36) étant aligné suivant un agencement perpendiculaire contre le quatrième engrenage (38) de manière à faire tourner le quatrième engrenage (38),
la chaîne ou la courroie (48) étant accouplée entre le quatrième engrenage (38) qui est connecté au premier organe (44) et le cinquième engrenage (40) connecté au deuxième organe (46).

7. Procédé (70) selon la revendication 6, dans lequel les étapes de déplacement (72, 76) du film (22) comprennent en outre chacune le déplacement du film à travers un passage défini entre des panneaux (16, 18) de la fenêtre (14).

8. Procédé (70) selon la revendication 6 ou 7, comprenant en outre le déplacement (74) du film (22) de telle sorte qu'une portion translucide (26) du film recouvre la section de la fenêtre (14) afin de rendre la section de la fenêtre translucide pour la personne.

9. Procédé (70) selon l'une quelconque des revendications 6 à 8, dans lequel le déplacement (72, 74, 76) du film (22) comprend en outre le déplacement sélectif du film entre une paire de rouleaux espacés.
